# EUROPEAN PATENT SPECIFICATION

(11) **EP 4 656 106 B1**
(45) Date of publication and mention of the grant of the patent: **22.07.2026**
(21) Application number: 25163280.8
(22) Date of filing: 12.03.2025
(51) Int. Cl.: A47J 31/52

(54) **COFFEE MACHINE WITH HEATING CONTROL SYSTEM**
KAFFEEMASCHINE MIT HEIZUNGSSTEUERUNGSSYSTEM
MACHINE À CAFÉ AVEC SYSTÈME DE COMMANDE DE CHAUFFAGE

(30) Priority: 31.05.2024 IT 202400012523
(43) Date of publication of application: 03.12.2025
(73) Proprietor: SIMONELLI GROUP S.P.A., 62020 Belforte del Chienti (MC) (IT)
(72) Inventor: FELIZIANI, Marco, 62029 Tolentino (MC) (IT); PARRINI, Mauro, 63821 Porto Sant'Elpidio (FM) (IT); CINGOLANI, Claudio Enrico, 62032 Camerino (MC) (IT)
(74) Representative: Cutropia, Gianluigi

(56) References cited:
- EP-A1- 3 430 952
- WO-A1-2015/073732
- US-A1- 2019 082 881

## Description

The present invention relates to a coffee machine with heating control system.

Energy consumption is becoming an increasingly important issue also in the field of coffee machines. Therefore, manufacturers are committed to develop coffee machines that perform better and consume less.

As it is known, a coffee machine comprises a boiler and a dispensing unit where a filter holder suitable for holding a panel of ground coffee is attached.

In order to use the coffee machine instantly, the boiler and the dispensing unit must be kept hot and at the desired temperature.

In fact, hot water that is fed by the boiler at approximately 93°C is used to extract the coffee. The water in the boiler is heated and kept warm by an electric heating resistance. The hot water from the boiler passes through a three-way solenoid valve located in the dispensing unit and flows towards the dispensing nozzle. To prevent the water from cooling, also the dispensing unit must be kept warm, at basically the same temperature as the water in the boiler. Therefore the hot water comes out of the nozzle of the dispensing unit and passes through the coffee panel contained in the filter holder to extract the liquid coffee.

Currently, in order to save energy, the efforts of manufacturers are mainly directed to insulate the coffee machine, and in particular the boiler and the dispensing unit, in order to minimize the heat loss.

Moreover, studies are carried out to optimize the dimensions of the internal parts of the coffee machine, as well as the electric power required by the electric and electronic components of the coffee machine.

However, it should be considered that, in order to use the coffee machine at best, the water in the boiler is kept at a temperature of approximately 93°C and also the dispensing unit is kept at a temperature of approximately 93°C, in such a way to always keep the dispensing water that flows in these components at the desired temperature. Evidently, the temperature of 93°C is indicative and can vary depending on the type of coffee used for extraction.

Generally speaking, the control unit of a coffee machine has an algorithm configured to control the temperature of the boiler and of the dispensing unit in order to keep these two elements at the correct temperature to constantly feed water at the desired temperature. Such a temperature is maintained as long as the coffee machine is switched on, with the exception of periods with reduced consumption that can be set and timed when the coffee shop is not busy.

Therefore, despite the research on the insulation of coffee machines and on the miniaturization and consumption of the electronic components, the coffee machines according to the prior art are still impaired by a large waste of energy that is mainly due to the fact that they must be kept on even when they are not used.

WO2015073732A1 discloses an apparatus for brewing a beverage comprising a reservoir and a boiler comprising a heating element and a fluid pickup, with valves to control the flow of fluid to the reservoir and to a brew chamber.

EP3430952A1, in the name of the applicant, discloses a coffee machine that comprises a self-cleaning cycle of the dispensing unit.

US2019/082881A1 discloses a system for brewing a cup of coffee that involves reading an identifier from a packet to access a brew recipe and starting a brew cycle based on the brew recipe.

The purpose of the present invention is to eliminate the drawbacks of the prior art by providing a coffee machine with heating control system that is capable of reducing the energy consumption of the coffee machine.

A further purpose is to provide such a coffee machine with heating control system that is versatile, practical and capable of adapting to the different usage requirements of the coffee machine.

These objectives are achieved in accordance with the invention with the characteristics listed in the attached independent claims.

Advantageous embodiments of the invention appear from the dependent claims.

Additional features of the invention will become clearer from the following detailed description, illustrated in the accompanying drawings, wherein:
Fig. 1 is a block diagram schematically illustrating a hydraulic system of a coffee machine according to the invention;
Fig. 2 is a block diagram illustrating the electric system of the coffee machine of Fig. 1, when the filter holder is arranged in the dispensing unit;
Fig. 3 is the same of Fig. 2, except for the fact that the filter holder is not arranged in the dispensing unit;
Fig. 4 is a perspective view illustrating a system according to the invention that comprises a coffee machine and a coffee grinder; and
Fig. 5 is an electric diagram of the system of Fig. 4.

With the aid of the Figures, a coffee machine according to the invention is described, which is compressively indicated with reference numeral 100.

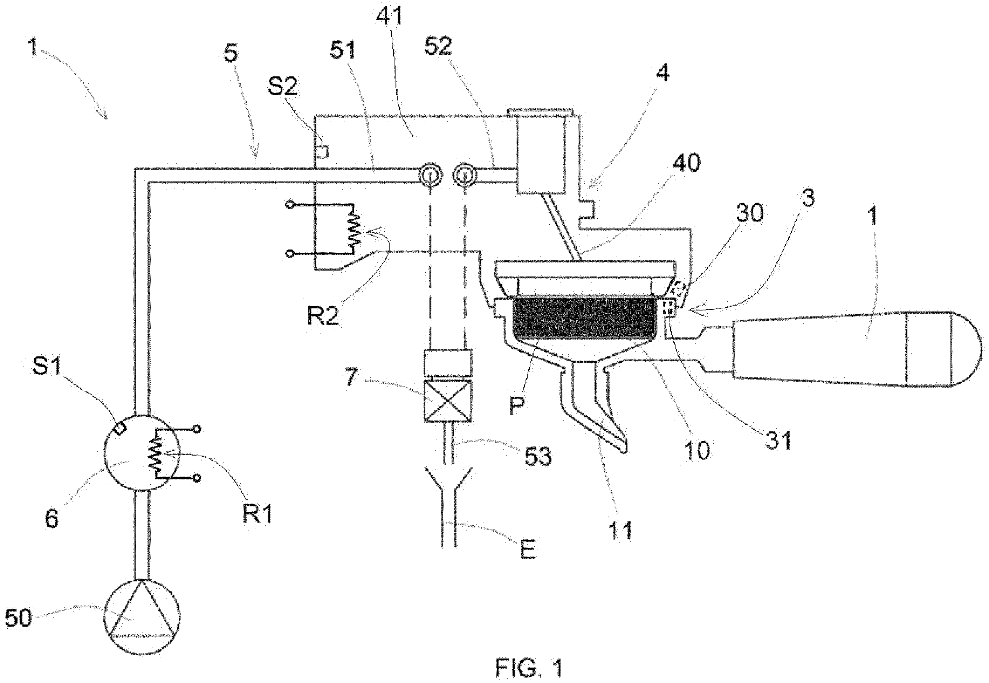

Now with reference to Fig. 1, the coffee machine (100) comprises a filter holder (1) with a housing (10) suitable for containing one or more doses of ground coffee (P). The ground coffee is compacted in the housing (10) of the filter holder. The filter holder (1) has an extraction nozzle (11) in communication with the housing (10) from which the beverage is extracted.

The filter holder (1) is arranged in a dispensing unit (4) that is provided with dispensing nozzles (40) to dispense hot water in the dose (P) of ground coffee contained in the filter holder.

The dispensing nozzles (40) of the dispensing unit are connected to a hydraulic system (5). The hydraulic system (5) comprises a pump (50) suitable for feeding pressurized water at a pressure of approximately 9 - 11 bar, generally coming from a reservoir (not shown in the figures) or from the water mains.

A boiler (6) is provided in the hydraulic system (5) between the pump (50) and the dispensing nozzles (40) of the dispensing unit. The boiler (6) heats the water to a desired temperature (Td) suitable for extracting the beverage. By way of example, the desired temperature (Td) may vary in the range of 88°C to 96°C. Therefore, in the hydraulic system (5), the water upstream of the boiler (6) is cold; instead, the water downstream of the boiler (6) is heated to a temperature of approximately 88°C-96°C.

For such a purpose the boiler (6) has a first electric heating resistance (R1) that heats the water and a first temperature sensor (S1) that detects the temperature (Ta) of the water in the boiler.

A dispensing valve (7) is provided in the dispensing unit (4) to enable or disable the flow of water from the hydraulic system (5) to the dispensing nozzles (40) of the dispensing unit.

The dispensing valve (7) is a three-way solenoid valve and is connected to three pipes:
- an inlet pipe (51) connected to the hydraulic system (5),
- an outlet pipe (52) connected to the dispensing nozzles (40), and
- a discharge pipe (53) connected to a drain (S).

During the extraction of the beverage, the dispensing valve (7) opens the communication between the inlet pipe (51) and the outlet pipe (52) and closes the communication with the discharge pipe (53). At the end of the extraction process, the dispensing valve (7) opens the communication between the outlet pipe (52) and the discharge pipe (53) and closes the communication with the inlet pipe (51). In this way, at the end of the extraction process, the water that remains between the dose (P) of ground coffee and the dispensing unit (4) is drained to eliminate the pressure in this area of the dispensing unit and remove the filter holder (1) without any leak of high-pressure water from the hydraulic system (5).

The dispensing unit (4) has a body (41) made of a solid metal bar, generally a brass bar. A second electric heating resistance (R2) is arranged in the body (41) of the dispenser unit (4) to heat the body (41) of the dispenser unit to basically the same temperature as the water in the boiler (6). Therefore, the second electric resistance (R2) can heat the body (41) of the dispensing unit to the desired temperature (Td) comprised between 88°C and 96°C. In this way, the hot water coming from the boiler (6) is not cooled in the dispensing unit (4).

A second temperature sensor (S2) is provided in the body of the dispensing unit to detect the temperature (Tc) of the body of the dispensing unit.

The coffee machine (100) has a detection system (3) suitable for detecting the presence of the filter holder (1) in the dispensing unit.

According to its simplest embodiment, the detection system (3) comprises a presence sensor (30) disposed in the dispensing unit (4) that is suitable for detecting the presence of the filter holder (1), regardless of the type of filter holder. The presence sensor (30) can be an electric, magnetic or optical sensor. Such a type of detection system is well known in the field and therefore is not described in detail.

According to a more complex embodiment, the detection system (3) comprises an identifier (31) placed in the filter holder (1) to identify the type of filter holder or the number of the filter holder if the coffee machine comprises more than one dispensing unit and more than one filter holder that are consecutively numbered. In such a case, the presence sensor (30) arranged in the dispensing unit not only detects the presence of the filter holder, but also detects the type of filter holder or the number of filter holder arranged in the dispensing unit (4).

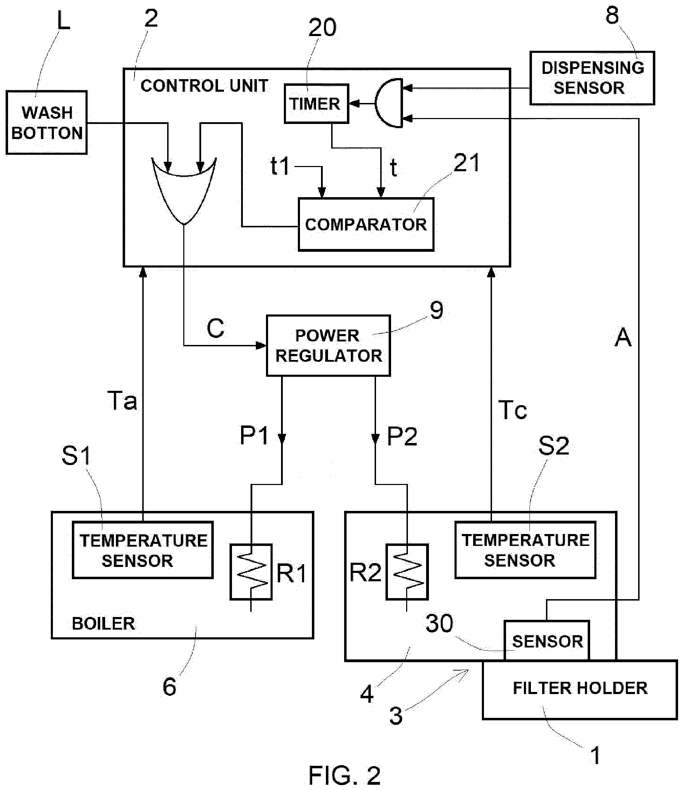

With reference to Fig. 2, the coffee machine (100) has a control unit (2) configured to power the electric resistances (R1, R2).

By way of example, the control unit (1) can control a power regulator (9) that supplies electric power to the first electric resistance (R1) and to the second electric resistance (R2) with respective power supplies (P1, P2).

When the coffee machine (100) is to be operated, the power supply (P1, P2) is such that the first electric resistance (R1) and the second electric resistance (R2) reach respective heating temperatures such as to heat the water in the boiler (6) and the body (41) of the dispensing unit to the desired temperature (Td).

In order to obtain such a temperature control, the control unit (2) receives the temperature (Ta) of the water in the boiler and the temperature (Tc) of the body of the dispensing unit from the temperature sensors (S1, S2).

The control unit (2) is connected to the presence sensor (30) of the detection unit of the filter holder. When the filter holder (1) is arranged in the dispensing unit, the presence sensor (30) sends a presence signal (A) to the control unit (2), indicating that the filter holder has been inserted in the dispensing unit.

It should be considered that the filter holder (1) is filled with the dose (P) of ground coffee and then is inserted into the dispensing unit. Once the filter holder with the coffee dose is inserted into the dispensing unit, the coffee is dispensed in a few seconds. Then the filter holder is removed from the dispensing unit and emptied. Subsequently, if there are no additional requests for coffee from customers, the empty filter holder is put back into the dispensing unit and left there until it is used again. Therefore, when the empty filter holder is placed in the dispensing unit, the coffee machine must not be operated.

The control unit has a timer (20). The timer (20) of the control unit is configured to count a time (t) after the control unit (2) receives the presence signal (A) from the presence sensor (30), indicating that the filter holder (1) has been inserted in the dispensing unit (4); this occurs regardless of whether the filter holder (1) has been inserted with or without the dose of ground coffee in the dispensing unit.

The control unit (2) has a comparator (21) that compares the time (t) counted by the timer with a threshold time (t1) indicative of a non-use of the filter holder. In fact, if the filter holder (1) is inserted in the dispensing unit (2) for a time greater than the threshold time (t1), it means that the filter holder is empty and the machine is not working.

The threshold time (t1) is set by the user or by the machine manufacturer. The threshold time (t1) can be in the range of 6 to 20 minutes; advantageously, the threshold time can be in the range of 8 to 12 minutes.

The timer (20) may also start after the hot water has been dispensed by the dispensing unit (4). Otherwise said, the coffee machine (10) has a dispensing sensor (8) that is suitable for detecting when the dispensing of pressurized hot water ends and the control unit (2) starts the timer (20) from the end of the dispensing. Also in such a case, by comparing the time (t) measured by the timer (20) with the threshold time (t1), the filter holder inserted in the specific dispensing unit is considered to be full of used coffee or empty if the time (t) measured by the timer reaches the threshold time (t1) indicating that there is no activity in the specific dispensing unit.

When the timer (20) reaches the threshold time (t1), the control unit (2) sends a reduction signal (C) to the power regulator (9), based on which the power regulator (9) decreases the power supply (P1) of the first electric resistance (R1) of the boiler, so that the temperature (Ta) of the water in the boiler decreases by a preset reduction value (Tr). In such a case the water in the boiler is cooled until Ta = Td - Tr. The reduction value (Tr) may be comprised in the range of 8°C to 12°C.

In addition, the power regulator (9) also decreases the power supply (P2) of the second resistance (R2) of the dispensing unit, so that the temperature (Tc) of the body of the dispensing unit decreases by the reduction value (Tr). In such a case, the body of the dispensing unit is cooled until Tc = Td - Tr.

In view of the above, energy saving is obtained due to the decrease in the power supply (P1, P2) of the electric resistances (R1, R2).

Practically speaking, when the time (t) counted by the timer reaches the threshold time (t1) that indicates the non-use, the temperature (Ta) of the water in the boiler and the temperature (Tc) of the body of the dispensing unit decrease to a stand-by temperature (Ts) given by the desired temperature (Td) minus the preset reduction value (Tr).

The power regulator (9) may not be present. In such a case, after the timer (20) has counted a time (t) equal to the threshold time (t1), the control unit (2) takes into consideration a stand-by temperature Ts = Td-Tr of the boiler and of the dispensing unit and then powers the first electric resistance (R1) and the second electric resistance (R2) until the boiler (6) and the dispensing unit (4) reach the stand-by temperature Ts = Td-Tr. Therefore, in such a case, energy saving is guaranteed by heating the resistances (R1, R2) for less time because they have to reach lower temperatures.

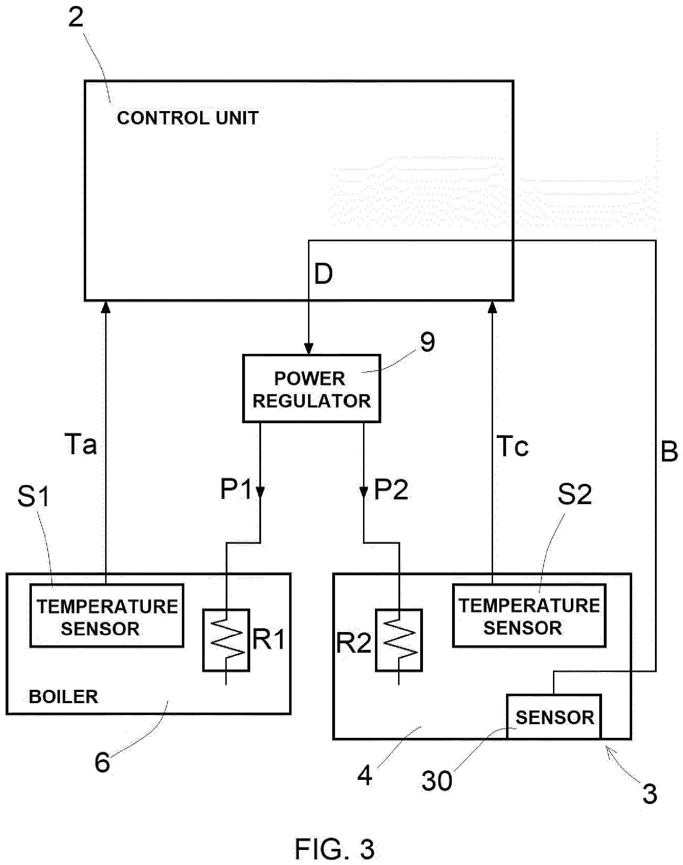

With reference to Fig. 3, when the presence sensor (30) of the detection system detects that the filter holder (1) has been removed, the presence sensor (30) sends a removal signal (B) to the control unit (2), indicating that the filter holder has been removed. At this point the timer (20) is reset and the control unit (2) sends an increase signal (D) to the power regulator (9) based on which the power supply (P1, P2) of the resistances (R1, R2) is increased, so that the temperature (Ta) of the water and the temperature (Tc) of the dispensing unit reach the desired temperature (Td). In such a case the water is heated until Ta = Td and the body of the dispensing unit is heated until Tc = Td.

It should be noted that, depending on the choice of the reduction value (Tr), the time required for the temperature (Ta) of the water and the temperature of the dispensing unit (Tc) to reach the desired temperature (Td) is generally less than 8 s.

On the other hand, the time taken by the operator to remove the filter holder from the dispensing unit, dispense the ground coffee, press the coffee and reinsert the filter holder into the dispensing unit is generally more than 8 s. Therefore, during the time in which the operator performs the aforementioned operations, the coffee machine increases the temperature of the water and the temperature of the body of the dispensing unit to the desired temperature (Td). So, when the operator inserts the filter holder with the ground coffee into the dispensing unit, the temperature of the water and of the body of the dispensing unit will be at the desired temperature for the coffee extraction.

It should be noted that the coffee machine (100) periodically requires a washing cycle to clean the dispensing unit and the filter holder. The washing cycle is activated by means of a wash button (L) provided on the coffee machine and pressed by the operator.

The washing cycle does not require that the temperature of the water in the boiler and of the body of the dispensing unit are as high as the desired temperature (Td) used for the coffee extraction. In fact, an excellent washing cycle can be obtained with a water temperature that is 10°C lower than the desired temperature (Td), thus resulting in energy saving.

Therefore, in such a case, when the operator presses the wash button (L) of the washing cycle, the control unit (2) sends the reduction signal (C) to the power regulator (9) that reduces the power supply (P1, P2) of the resistances (R1, R2), as described above.

Therefore, the reduction signal (C) is enabled by the control unit when the time (t) in which the filter holder is not used exceeds the threshold time (t1) or when the wash button (L) is pressed.

It should be noted that a coffee machine (100) may include a plurality of dispensing units (4) in which each dispensing unit (4) has an independent temperature control.

In such a case, advantageously, the detection system (3) comprises the identifier (31) arranged in the filter holder (1) to identify the number of the filter holder that identifies the dispensing unit associated with each filter holder.

In such a case, the coffee machine according to the invention works perfectly because if some dispensing units are not used for a time longer than the threshold time (t1), only the power supply of the electric resistances of the dispensing units that are not being used is reduced.

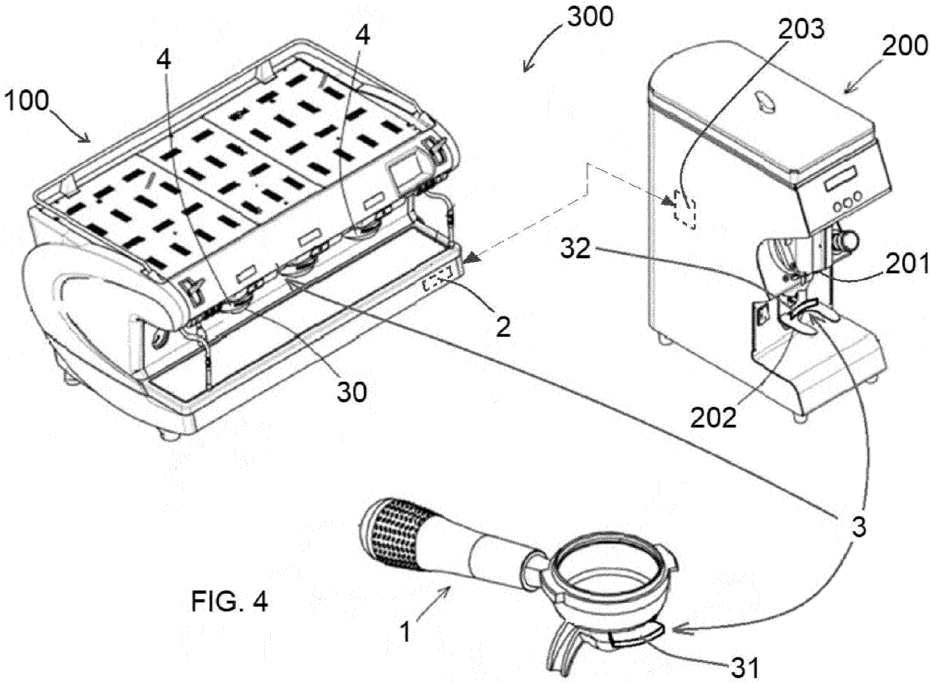

Fig. 4 illustrates a system (300) comprising a coffee machine (100) according to the invention and a coffee grinder (200).

The coffee grinder (200) comprises a dispenser (201) that dispenses doses of ground coffee and a bracket (202) arranged under the dispenser (201) to support and fill the filter holder (1) with the ground coffee.

In such a case, the detection system (3) also comprises a second presence sensor (32) arranged in the coffee grinder, for example in the bracket (202) of the coffee grinder, to detect when the filter holder (1) is arranged in the bracket (202) of the coffee grinder.

The second presence sensor (32) of the coffee grinder is operationally connected to a control unit (203) of the coffee grinder.

The control unit (203) of the coffee grinder is operationally connected to the control unit (2) of the coffee machine either in wireless or wired mode.

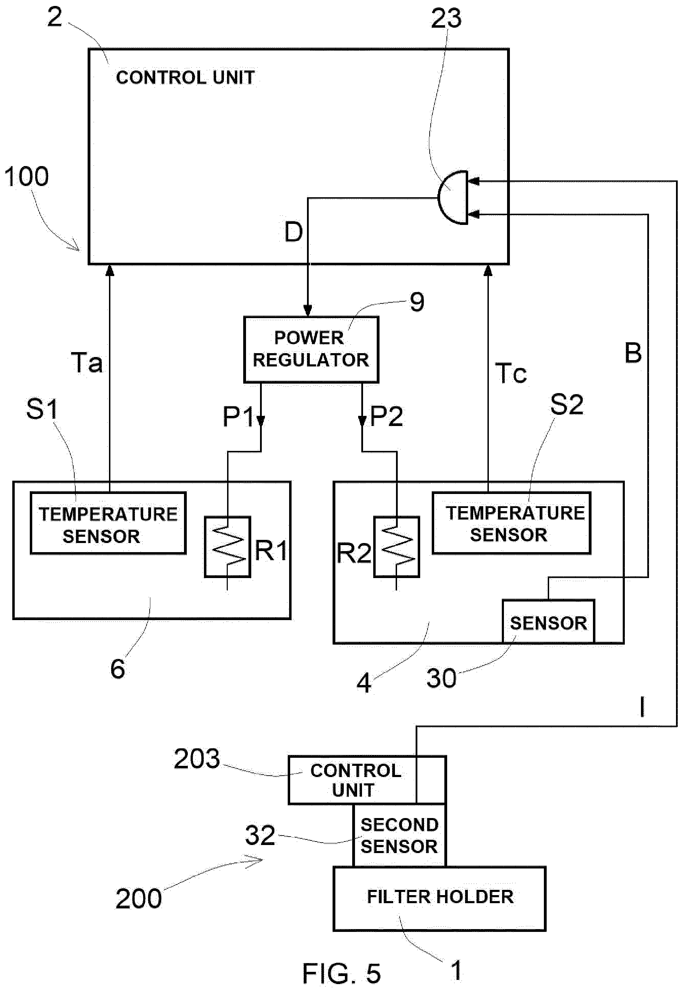

As shown in Fig. 5, the control unit (2) of the coffee machine receives an information signal (I) from the control unit (203) of the coffee grinder indicating that the filter holder (1) is arranged in the coffee grinder (200).

In such a case, the control unit (2) of the coffee machine is configured to send the increase signal (D) to the power regulator (9) only after receiving the information signal (I) that indicates that the filter holder (1) is arranged in the coffee grinder (200).

Therefore, the increase signal (D) is sent by the control unit (2) to the power regulator (9) when the presence sensor (30) of the dispensing unit detects that the filter holder (1) has been removed from the dispensing unit and when the second presence sensor (32) of the coffee grinder detects that the filter holder (1) has been inserted into the coffee grinder (200). Otherwise said, the removal signal (B) and the information signal (I) are sent to an END logic device (24) from which the increase signal (D) is generated.

Such a configuration avoids the false restarts that may occur when the filter holder is removed from the dispensing unit for cleaning or other reasons that are not related to the dispensing of coffee.

Equivalent variations and modifications can be made to the present embodiment of the invention by a technician in the field, falling in any case within the scope of the invention as expressed in the attached claims.

## Claims

1. Coffee machine (100) comprising:
- a boiler (6) comprising a first electric resistance (R1) of heating type to heat the water in the boiler and a first temperature sensor (S1) to detect a temperature (Ta) of the water in the boiler,
- a dispensing unit (4) comprising a body (41), dispensing nozzles (40), a second electric resistance (R2) of heating type to heat the body (41) of the dispensing unit and a second temperature sensor (S2) to detect a temperature (Tc) of the body of the dispensing unit,
- a water system (5) connecting the boiler (6) to the dispensing unit (4),
- a pump (50) to pressurize the water in the water system (6),
- a filter holder (1) suitable for containing a dose (P) of ground coffee and for being arranged in the dispensing unit (4) for the extraction of liquid coffee,
- a control unit (2) configured to power said electric resistances (R1, R2) so that the electric resistances (R1, R2) reach respective heating temperatures such that the water in the boiler (6) and the body (41) of the dispensing unit are heated to a desired temperature (Td) suitable for extracting the coffee;
**characterised in**:
- a detection system (3) suitable for detecting the presence of the filter holder (1) in the dispensing unit (4), and said control unit (2) comprising:
- a timer (20) configured to count a time (t) after it receives a presence signal (A) from the detection system (3) indicative of an insertion of the filter holder (1) into the dispensing unit, and
- a comparator (21) configured to compare the time (t) counted by the timer with a threshold time (t1) indicative of a non-use of the coffee machine;
said control unit (2) being configured to power said electric resistances (R1, R2), so that when the time (t) counted by the timer reaches the threshold time (t1), the temperature (Ta) of the water in the boiler and the temperature (Tc) of the body of the dispensing unit decrease to a stand-by temperature (Ts) given by the desired temperature (Td) minus a preset reduction value (Tr).

2. The coffee machine (100) according to claim 1, wherein said detection system (3) is configured to send a removal signal (B) to the control unit (2) when the filter holder (1) is removed from the dispensing unit (4); and said control unit (2) is configured so that when it receives said removal signal (B), the timer (20) is reset and the electric resistances (R1, R2) are powered, so that the temperature (Ta) of the water and the temperature (Tc) of the dispensing unit reach the desired temperature (Td).

3. The coffee machine (100) according to claim 1 or 2, wherein said threshold time (t1) is comprised in the range from 6 to 20 minutes, preferably in the range from 8 to 12 minutes.

4. The coffee machine (100) according to any one of the preceding claims, wherein said reduction value (Tr) is in the range from 8° to 12 °C.

5. The coffee machine (100) according to any one of the preceding claims, further comprising a power regulator (9) suitable for regulating an electric power supply (P1, P2) of the first and second electric resistances (R1, R2), respectively.

6. The coffee machine (100) according to claim 5, wherein said control unit (2) is configured to send a reduction signal (C) to said power regulator (9) when the time (t) counted by the timer reaches the threshold time (t1), so that the power regulator (9) decreases the supply powers (P1, P2) of the first and second electric resistances (R1, R2), so that the temperature (Ta) of the water in the boiler and the temperature (Tc) of the body of the dispensing unit decrease by a preset reduction value (Tr).

7. The coffee machine (100) according to claim 5 or 6, when dependent on claim 2, wherein said control unit (2) is configured to send an increase signal (D) to said power regulator (9) when it receives the removal signal (B), so that the power regulator increases the supply power (P1, P2) of the electric resistances (R1, R2), so that the temperature (Ta) of the water and the temperature (Tc) of the dispensing unit reach the desired temperature (Td).

8. The coffee machine (100) according to any one of the preceding claims, further comprising a dispensing sensor (8) suitable for detecting when the dispensing of pressurized hot water from the dispensing unit (4) ends, and said control unit (2) is configured so that the timer (20) starts counting from the time when the dispensing of hot water by the dispensing unit (4) is ended.

9. The coffee machine (100) according to any one of the preceding claims, wherein said coffee machine (100) further comprises a wash button (L) that starts a washing cycle, and said control unit (2) is configured to power said electric resistances (R1, R2) so that the temperature (Ta) of the water in the boiler and the temperature (Tc) of the body of the dispensing unit decrease to the stand-by temperature (Ts) when the operator pushes said wash button (L).

10. The coffee machine (100) according to any one of the preceding claims, wherein said coffee machine (100) comprises a plurality of dispensing units (4) in which each dispensing unit (4) has an autonomous temperature control and a plurality of filter holders (1) in which each filter holder is associated with a respective dispensing unit (4);
said detection system (3) comprising an identifier (31) arranged in each filter holder (1) to identify a filter holder number that identifies the dispensing unit associated with each filter holder.

11. System (300) comprising a coffee machine (100) according to any one of the preceding claims and a coffee grinder (200) suitable for receiving said filter holder (1) to dispense a dose of ground coffee into the filter holder, wherein said detection system (3) further comprises a second presence sensor (32) disposed in the coffee grinder (200) to detect the presence of the filter holder (1) in the coffee grinder;
wherein said coffee grinder (200) has a control unit (203) operatively connected to the control unit (2) of said coffee machine (100) so that the control unit (2) of the coffee machine receives an information signal (I) from the control unit (203) of the coffee grinder indicating that the filter holder (1) has been disposed in the coffee grinder (200); and the control unit (2) of the coffee machine is configured to power the electric resistances (R1, R2) so that the temperature (Ta) of the water and the temperature (Tc) of the dispensing unit reach the desired temperature (Td).

## Patentansprüche

1. Kaffeemaschine (100), umfassend:
- einen Kessel (6), umfassend einen ersten Widerstand (R1) vom Heiztyp, um das Wasser im Kessel zu erhitzen, und einen ersten Temperaturfühler (S1), um eine Temperatur (Ta) des Wassers im Kessel zu erfassen,
- eine Ausgabegruppe (4), umfassend ein Gehäuse (41), Ausgabedüsen (40), einen zweiten Widerstand (R2) vom Heiztyp, um das Gehäuse (41) der Ausgabegruppe zu erhitzen, und einen zweiten Temperaturfühler (S2), um eine Temperatur (Tc) des Gehäuses der Ausgabegruppe zu erfassen,
- ein Wassersystem (5), das den Kessel (6) mit der Ausgabegruppe (4) verbindet,
- eine Pumpe (50), um das Wasser in dem Wassersystem (6) mit Druck zu beaufschlagen,
- einen Filterhalter (1), der geeignet ist, eine Portion (P) Kaffeemehl aufzunehmen und in der Ausgabegruppe (4) zum Ausziehen von flüssigem Kaffee angeordnet zu werden,
- eine Steuereinheit (2), die konfiguriert ist, um die Widerstände (R1, R2) so zu versorgen, dass die Widerstände (R1, R2) jeweilige Heiztemperaturen erreichen, derart, dass das Wasser in dem Kessel (6) und das Gehäuse (41) der Ausgabegruppe auf eine gewünschte Temperatur (Td) erhitzt werden, die zum Ausziehen des Kaffees geeignet ist;
**gekennzeichnet durch**
- ein Erfassungssystem (3), das geeignet ist, die Präsenz des Filterhalters (1) in der Ausgabegruppe (4) zu erfassen, und
wobei die Steuereinheit (2) Folgendes umfasst:
- einen Timer (20), der konfiguriert ist, um eine Zeit (t) zu zählen, nachdem er ein Präsenzsignal (A) vom Erfassungssystem (3) empfangen hat, das ein Einsetzen des Filterhalters (1) in der Ausgabegruppe anzeigt, und
- einen Komparator (21), der konfiguriert ist, um die vom Timer gezählte Zeit (t) mit einer Schwellenzeit (t1) zu vergleichen, die eine Nichtbenutzung der Kaffeemaschine anzeigt;
wobei die Steuereinheit (2) konfiguriert ist, um die Widerstände (R1, R2) zu versorgen, so dass, wenn die vom Timer gezählte Zeit (t) die Schwellenzeit (t1) erreicht, die Temperatur (Ta) des Wassers in dem Kessel und die Temperatur (Tc) des Gehäuses der Ausgabegruppe auf eine Bereitschaftstemperatur (Ts) absinkt, die durch die gewünschte Temperatur (Td) abzüglich eines voreingestellten Verminderungswerts (Tr) gegeben ist.

2. Kaffeemaschine (100) nach Anspruch 1, wobei das Erfassungssystem (3) konfiguriert ist, um ein Entnahmesignal (B) an die Steuereinheit (2) zu senden, wenn der Filterhalter (1) aus der Ausgabegruppe (4) herausgenommen wird; und wobei die Steuereinheit (2) so konfiguriert ist, dass wenn sie das Entnahmesignal (B) empfängt, der Timer (20) zurückgesetzt wird und die Widerstände (R1, R2) versorgt werden, so dass die Temperatur (Ta) des Wassers und die Temperatur (Tc) der Ausgabegruppe die gewünschte Temperatur (Td) erreichen.

3. Kaffeemaschine (100) nach Anspruch 1 oder 2, wobei die Schwellenzeit (t1) im Bereich zwischen 6 und 20 Minuten, vorzugsweise im Bereich zwischen 8 und 12 Minuten liegt.

4. Kaffeemaschine (100) nach einem der vorstehenden Ansprüche, wobei der Verminderungswert (Tr) im Bereich zwischen 8 °C und 12 °C liegt.

5. Kaffeemaschine (100) nach einem der vorstehenden Ansprüche, ferner umfassend einen Leistungsregler (9), der geeignet ist, eine elektrische Versorgungsleistung (P1, P2) des ersten bzw. zweiten elektrischen Widerstands (R1, R2) zu regeln.

6. Kaffeemaschine (100) nach Anspruch 5, wobei die Steuereinheit (2) konfiguriert ist, um ein Verminderungssignal (C) an den Leistungsregler (9) zu senden, wenn die vom Timer gezählte Zeit (t) die Schwellenzeit (t1) erreicht, so dass der Leistungsregler (9) die Versorgungsleistungen (P1, P2) des ersten und des zweiten Widerstands (R1, R2) vermindert, so dass die Temperatur (Ta) des Wassers im Kessel und die Temperatur (Tc) des Gehäuses der Ausgabegruppe um einen voreingestellten Verminderungswert (Tr) vermindert werden.

7. Kaffeemaschine (100) nach Anspruch 5 oder 6, wenn abhängig von Anspruch 2, wobei die Steuereinheit (2) konfiguriert ist, um an den Leistungsregler (9) ein Erhöhungssignal (D) zu senden, wenn sie das Verminderungssignal (B) empfängt, so dass der Leistungsregler die Versorgungsleistung (P1, P2) der Widerstände (R1, R2) erhöht, so dass die Temperatur (Ta) des Wassers und die Temperatur (Tc) der Ausgabegruppe die gewünschte Temperatur (Td) erreichen.

8. Kaffeemaschine (100) nach einem der vorstehenden Ansprüche, ferner umfassend einen Ausgabesensor (8), der geeignet ist, zu erfassen, wenn die Ausgabe von druckbeaufschlagtem heißem Wasser aus der Ausgabegruppe (4) beendet ist, und wobei die Steuereinheit (2) so konfiguriert ist, dass der Timer (20) zu zählen beginnt, wenn die Ausgabe von heißem Wasser durch die Ausgabegruppe (4) beendet ist.

9. Kaffeemaschine (100) nach einem der vorstehenden Ansprüche, wobei die Kaffeemaschine (100) ferner eine Spültaste (L) umfasst, die einen Spülzyklus startet, und wobei die Steuereinheit (2) konfiguriert ist, um die Widerstände (R1, R2) zu versorgen, so dass die Temperatur (Tc) des Wassers im Kessel und die Temperatur (Tc) des Gehäuses der Ausgabegruppe auf die Bereitschaftstemperatur (Ts) sinken, wenn der Bediener die Spültaste (L) drückt.

10. Kaffeemaschine (100) nach einem der vorstehenden Ansprüche, wobei die Kaffeemaschine (100) eine Vielzahl von Ausgabegruppen (4) umfasst, wobei jede Ausgabegruppe (4) eine autonome Temperatursteuerung aufweist, und eine Vielzahl von Filterhaltern (1), wobei jeder Filterhalter einer jeweiligen Ausgabegruppe (4) zugeordnet ist;
wobei das Erfassungssystem (3) einen Identifikator (31) umfasst, der in jedem Filterhalter (1) angeordnet ist, um eine Filterhalternummer zu identifizieren, die die Ausgabegruppe angibt, die jedem Filterhalter zugeordnet ist.

11. System (300), umfassend eine Kaffeemaschine (100), nach einem der vorstehenden Ansprüche, und eine Kaffeemühle (200), die geeignet ist, den Filterhalter (1) aufzunehmen, um eine Portion Kaffeemehl in den Filterhalter auszugeben, wobei das Erfassungssystem (3) ferner einen zweiten Präsenzsensor (32) umfasst, der in der Kaffeemühle (200) angeordnet ist, um die Präsenz des Filterhalters (1) in der Kaffeemühle zu erfassen;
wobei die Kaffeemühle (200) eine Steuereinheit (203) aufweist, die mit der Steuereinheit (2) der Kaffeemaschine (100) wirkverbunden ist, so dass die Steuereinheit (2) der Kaffeemaschine von der Steuereinheit (203) der Kaffeemühle ein Informationssignal (I) empfangen kann, das anzeigt, dass der Filterhalter (1) in der Kaffeemühle (200) angeordnet worden ist; und wobei die Steuereinheit (2) der Kaffeemaschine konfiguriert ist, um die Widerstände (R1, R2) so zu versorgen, so dass die Temperatur (Ta) des Wassers und die Temperatur (Tc) der Ausgabegruppe die gewünschte Temperatur (Td) erreichen.

## Revendications

1. Machine à café (100) comprenant :
- une chaudière (ou boiler) (6) comprenant une première résistance électrique (R1) du type à réchauffement pour chauffer l'eau dans la chaudière et un premier capteur de température (S1) pour relever une température (Ta) de l'eau dans la chaudière,
- un groupe distributeur (4) comprenant un corps (41), des buses de distribution (40), une seconde résistance électrique (R2) du type à réchauffement, pour chauffer le corps (41) du groupe distributeur et un second capteur de température (S2) pour relever une température (Tc) du corps du groupe distributeur,
- un système hydraulique (5) qui relie la chaudière (6) au groupe distributeur (4),
- une pompe (50) pour mettre sous pression l'eau dans le système hydraulique (6),
- un porte-filtre (1) apte à contenir une dose (P) de café moulu et à être disposé dans le groupe distributeur (4) pour l'extraction de café liquide,
- une unité de commande (2) configurée pour alimenter lesdites résistances électriques (R1, R2) de façon que les résistances électriques (R1, R2) atteignent des respectives températures de réchauffement, telles à réchauffer l'eau dans la chaudière (6) et le corps (41) du groupe distributeur à une température désirée (Td), adaptée à l'extraction du café ;
**caractérisée en ce qu'**elle prévoit
un système de détection (3) apte à relever la présence du porte-filtre (1) dans le groupe distributeur (4), et
ladite unité de commande (2) comprenant :
- un temporisateur (20) configuré pour compter un laps de temps (t) après avoir reçu un signal de présence (A) depuis le système de détection (3) indicatif de l'introduction du porte-filtre (1) dans le groupe distributeur, et
- un comparateur (21) configuré pour comparer le laps de temps (t) compté par le temporisateur avec un temps de seuil (t1) indicatif de la non-utilisation de la machine à café ;
ladite unité de commande (2) étant configurée pour alimenter lesdites résistances (R1, R2), de façon que, lorsque le laps de temps (t) compté par le temporisateur atteint le temps de seuil (t1), la température (Ta) de l'eau dans la chaudière et la température (Tc) du corps du groupe distributeur diminuent à une température de stand-by (Ts) donnée par la température désirée (Td) défalquée d'une valeur de réduction (Tr), préfixée.

2. Machine à café (100) selon la revendication 1, où ledit système de détection (3) est configuré pour envoyer un signal de suppression (B) à l'unité de commande (2) lorsqu'on enlève le porte-filtre (1) du groupe distributeur (4) ; et ladite unité de commande (2) est configurée de façon que, lorsqu'elle reçoit ledit signal de suppression (B), le temporisateur (20) se rétablit à zéro et les résistances électriques (R1, R2) sont alimentées afin que la température (Ta) de l'eau et la température (Tc) du groupe distributeur atteignent la température désirée (Td).

3. Machine à café (100) selon la revendication 1 ou 2, où ledit temps de seuil (t1) est compris dans une plage de 6 - 20 minutes ; préférablement dans la plage de 8 - 12 minutes.

4. Machine à café (100) selon l'une quelconque des revendications précédentes, où ladite valeur de réduction (Tr) est comprise dans la plage de 8° - 12 °C.

5. Machine à café (100) selon l'une quelconque des revendications précédentes, comprenant également un régulateur de puissance (9) apte à régler une puissance électrique d'alimentation (P1, P2) respectivement de la première et de la seconde résistances électriques (R1, R2).

6. Machine à café (100) selon la revendication 5, où ladite unité de commande (2) est configurée pour envoyer un signal de réduction (C) au susdit régulateur de puissance (9) lorsque le laps de temps (t) compté par le temporisateur atteint le temps de seuil (t1), de façon que le régulateur de puissance (9) diminue les puissances d'alimentation (P1, P2) de la première et de la seconde résistances électriques (R1, R2) afin que la température de l'eau (Ta) dans la chaudière et la température du corps (Tc) du groupe distributeur diminuent d'une valeur de réduction (Tr) préfixée.

7. Machine à café (100) selon la revendication 5 ou 6, quand dépendantes de la revendication 2, où ladite unité de commande (2) est configurée pour envoyer au susdit régulateur de puissance (9) un signal d'augmentation (D), lorsqu'elle reçoit le signal de suppression (B), de façon que le régulateur de puissance augmente la puissance d'alimentation (P1, P2) des résistances électriques (R1, R2), afin que la température (Ta) de l'eau et la température (Tc) du groupe distributeur atteignent la température désirée (Td).

8. Machine à café (100) selon l'une quelconque des revendications précédentes, comprenant également un capteur de distribution (8) apte à relever lorsque la distribution d'eau chaude sous pression de la part du groupe distributeur (4) cesse et ladite unité de commande (2) est configurée de façon que le temporisateur (20) commence à compter à partir de la fin de la distribution d'eau chaude de la part du groupe distributeur (4).

9. Machine à café (100) selon l'une quelconque des revendications précédentes, où ladite machine à café (100) comprend également un bouton-poussoir de lavage (L) qui lance un cycle de lavage et ladite unité de commande (2) est configurée de façon à alimenter lesdites résistances électrique (R1, R2), afin que la température (Ta) de l'eau dans la chaudière et la température (Tc) du corps du groupe distributeur diminuent à la température de stand-by (Ts) lorsque l'opérateur appuie sur ledit bouton-poussoir de lavage (L).

10. Machine à café (100) selon l'une quelconque des revendications précédentes, où ladite machine à café (100) comprend une pluralité de groupes distributeurs (4) où chaque groupe distributeur (4) a un contrôle autonome de température et une pluralité de porte-filtres (1) où chaque porte-filtre est associé à un respectif groupe distributeur (4) ;
ledit système de détection (3) comprenant un élément d'identification (31) disposé dans chaque porte-filtre (1) pour identifier un numéro du porte-filtre qui identifie à quel groupe distributeur chaque porte-filtre est associé.

11. Système (300) comprenant une machine à café (100) selon l'une quelconque des revendications précédentes et un moulin à café (200) apte à recevoir ledit porte-filtre (1) pour distribuer une dose de café moulu dans le porte-filtre, où ledit système de détection (3) comprend égalent un second capteur de présence (32) disposé dans le moulin à café (200) pour relever la présence du porte-filtre (1) dans le moulin à café ;
où ledit moulin à café (200) a une unité de commande (203) opérationnellement branchée à l'unité de commande (2) de la susdite machine à café (100) de façon que l'unité de commande (2) de la machine à café puisse recevoir depuis l'unité de commande (203) du moulin à café un signal d'information (I) qui indique que le porte-filtre (1) a été disposé dans le moulin à café (200) ; et l'unité de commande (2) de la machine à café est configurée pour alimenter les résistances électriques (R1, R2), de façon que la température (Ta) de l'eau et la température (Tc) du groupe distributeur atteignent la température désirée (Td).
